# EUROPEAN PATENT APPLICATION

(11) **EP 2 284 804 A2**
(43) Date of publication of application: **16.02.2011**
(21) Application number: 10167016.4
(22) Date of filing: 23.06.2010
(51) Int. Cl.: G07C 13/00

(54) **Voter directed context-sensitive sponsorship of online content and services**

(30) Priority: 23.06.2009 US 219703 P
(71) Applicant: Peerspin, Inc., Mountain View, CA 94043 (US)
(72) Inventor: Huang, Kurt Hwa, Mountain View, CA 94043 (US); Kuroda, Duane Toyoichi, Campbell, CA 95008 (US); Jun, Gyuchang, Sunnyvale CA 84086 (KR)
(74) Representative: Betten & Resch

(57) **Abstract**

A method and system of voting and polling that utilizes content and context awareness of articles or blog posts published to deliver a revenue opportunity via context sensitive ad units based on article content, user revealed and implicit preferences, voting history, and other user opted in behavior.

## Description

### BACKGROUND OF THE INVENTION

Current online voting systems operate in a standard manner, presenting the user with the ability to vote content up or down, or rate content with a number of stars. The common weaknesses with these approaches are in both the form and implementation of the systems. The standard rating widgets typically show the overall average of user ratings as well as the total number of users who have rated the content using the widget. This creates a two sided bias, first, by encouraging content owners/creators to vote early on, so they can affect the results in their favor since early votes have disproportionately high weight, second, by discouraging voting later on since votes have a smaller and smaller weight when larger and larger number of people vote.

Voting widgets suffer similar and extended problems. The voting widgets that have been used and installed on a per article basis are reused code from ratings widgets with a new interface, showing the number of votes and the percentage of up or down votes. This implementation tends to yield the same biases as the ratings widgets the code was borrowed or copied from. The results in a low yield for the total number of votes and limited interaction between the user and the content.

Voting widgets that are not used on a regular per article basis tend to fare better. These voting widgets are targeted one-off polls that are timely and related to the content of an article. For example, an article on electric cars may ask the question "Is a $100K Tesla roadster too expensive to make a difference" with answer options "yes" or "no". In this poll, the voting is not about the article, but about the specific question. In these implementations , the user votes "yes" or "no", with the results not shown until user votes, often with the results inline, replacing the voting question and answer space. This type of voting tends to generate more results, but is dependent on a compelling question created by the article writer or editor for that specific article. In this case, the poll is manually created to match the context of the article, and the results generated and shown specifically for that poll, without any direct association to the article quality.

More recently, polling widget companies have popped up, offering drop in polling and voting widgets for blogs, publishers, and other authors. These drop in widgets come in two forms: shotgun polls, and content aware polls. Shotgun polls represent the class of polls where the publisher places code that renders a poll or voting widget in their blog when the page loads, and the poll represents anything in inventory that the poll provider has available, and may not be relevant at all to the blog or website, or even article. The poll provider is paid by a company sponsor that wants the poll results, and the poll provider then splits the revenue paid by the sponsor with the website or blog that hosts the for pay poll. When these poll providers do not have sponsored polls, the polls are used as a lead generation and advertising tool, providing advertising for the poll provider often before, during, and after the user interaction, yielding irrelevant polls and invasive advertising, not to mention new page loads where the user is taken back to the polling providers site to see results and/or other polls. Content aware polls, or polls that are based on the content, largely do not exist. There currently are no easy to find content aware polling systems that provide polls relevant to the content of online articles for each and every article of a blog or website. A likely cause for the lack of providers in this space is the lack of relevant poll inventory and the costs associated with hosting such a system.

As a category, voting and polling widgets have thus fallen into two groups -the first type ratings type widgets which appear on every post to generate article popularity data, and the second type, not of the first type, hand crafted polls based on singular issues manually placed one at a time for use with specific content. A side effect of the establish mechanisms of polling is that content aware polls have not proven to be generally available, but there has yet to be a clear business and economic reason to support the processing, complexity, and cost of content aware polling and voting. Likewise, polling and voting tools generally have not shown.

### SUMMARY OF THE INVENTION

The invention lies in a method and system of voting and/or polling that delivers more value than article popularity, utilizing content and context awareness for each and every article or blog post published, to provide a revenue opportunity for all publishers based on context sensitive ad units delivered inline to a user during his/her voting experience without undue focus or page displacement.

### DESCRIPTION OF THE INVENTION

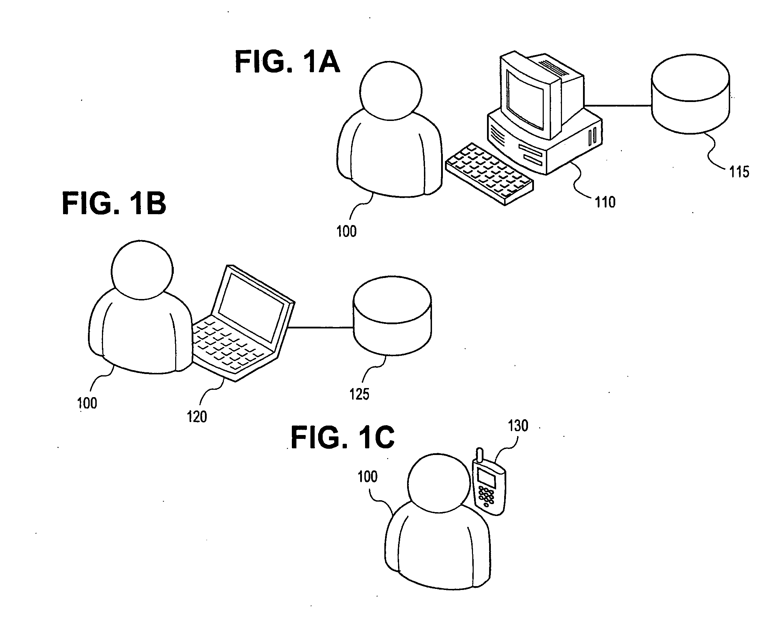

Fig 1 shows User 100 interacting with various computing devices 110, 120, and 130 where the invention applies and may be deployed using local or remote storage.
Fig. 1 a. shows user 100 with desktop computer 110 which may use local storage or remote storage 115.
Fig. 1b. shows user 100 with laptop computer 120 which may use local storage or remote storage 125

Fig. 1a. shows user 100 with mobile phone or smart-phone 130.

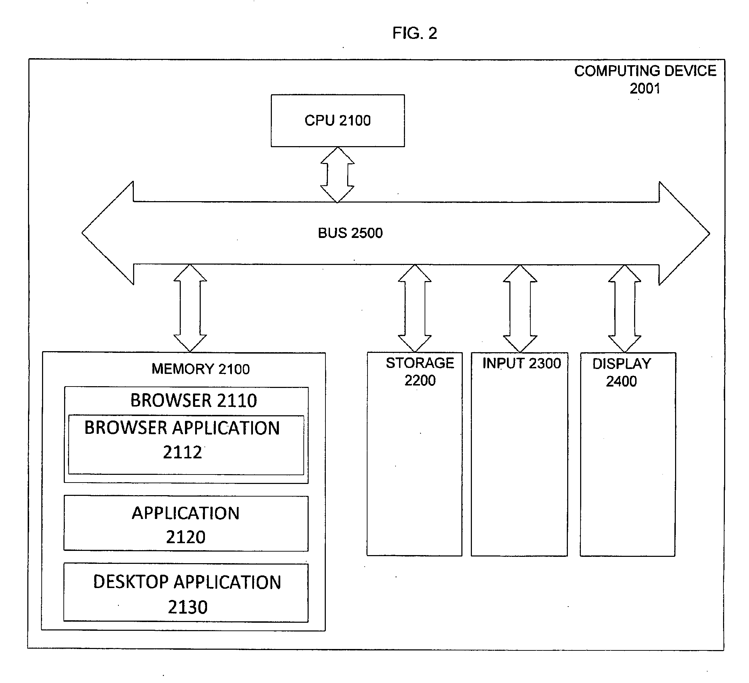

Fig 2 shows a system diagram of computing device 2001, which may be any computing device from Figure 1, where computing device 2001 includes components CPU 2100, Display 2400, Input devices 2300, longer term storage 2200 and short-term storage labeled memory 2100 connected by system bus 2500. The short-term memory 2100 or long-term memory 2200 can store the code which is run by CPU 2100 in short-term memory 2100, but may be run in longer term storage 2200. The invention may run as application 2120 which may be a service that runs at startup, runtime, shutdown, or other times or events, may run as a desktop application 2130, or run as a browser application 2112, where browser application 2112 runs in browser 2110, which is itself a desktop application or system service. The invention may run as a browser application 2112 written in programming or scripting languages including, but not limited to javascript, actionscript, adobe flash, adobe flex, vbscript, and others, or as an application written in programming or scripting languages, including, but not limited to C, C++, Perl, Python, Java, Visual Basic, Ruby, javascript, actionscript, adobe flash, adobe flex, vbscript and others. In a preferred embodiment, the invention is written in Javascript and runs as a browser application to enable easy installation.

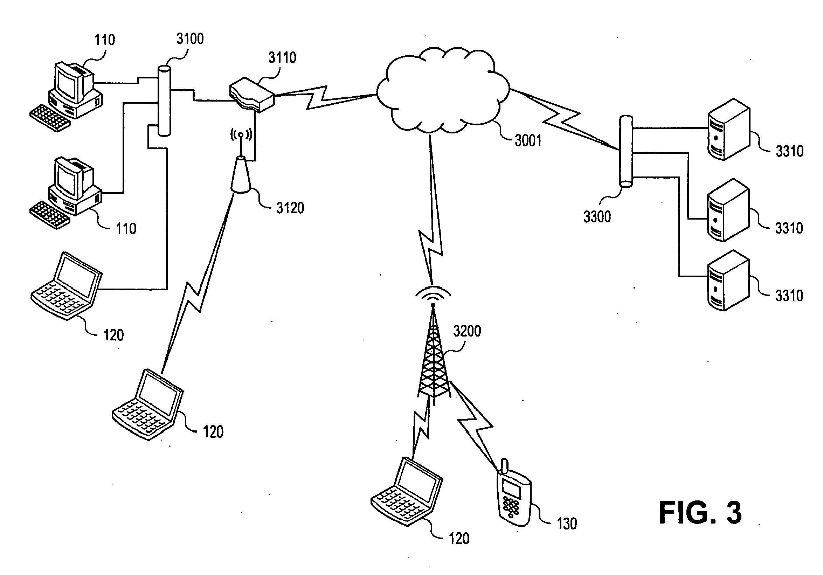

Fig 3 shows computing devices 110, 120, and 130 connected to networks 3300 where computing devices 3310 may remotely host the code of the invention. The code may also be downloaded and installed on an individual computing device such that networks, remote servers, and remote storage are not necessary. In a preferred embodiment, computing devices connect through local networks 3100, wireless access points 3120, and wireless networks 3200, where routers 3110 can direct the code of the invention to the appropriate computing devices through larger networks 3001 such as the Internet using standard protocols including but not limited to HTTP, TCP/IP as other non-standard protocols.

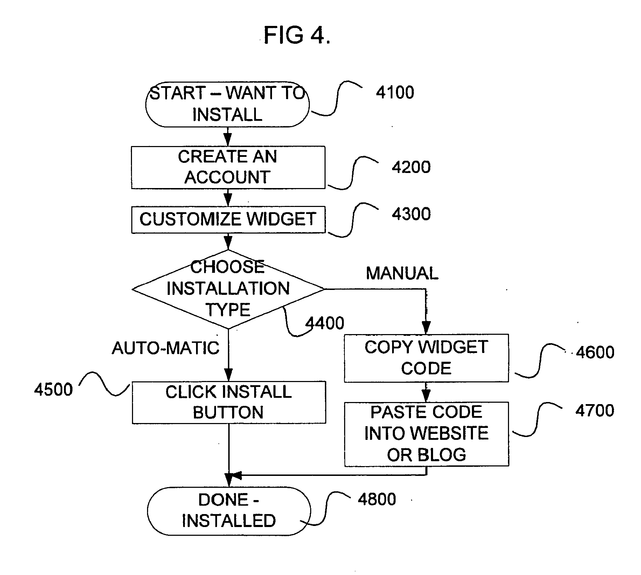

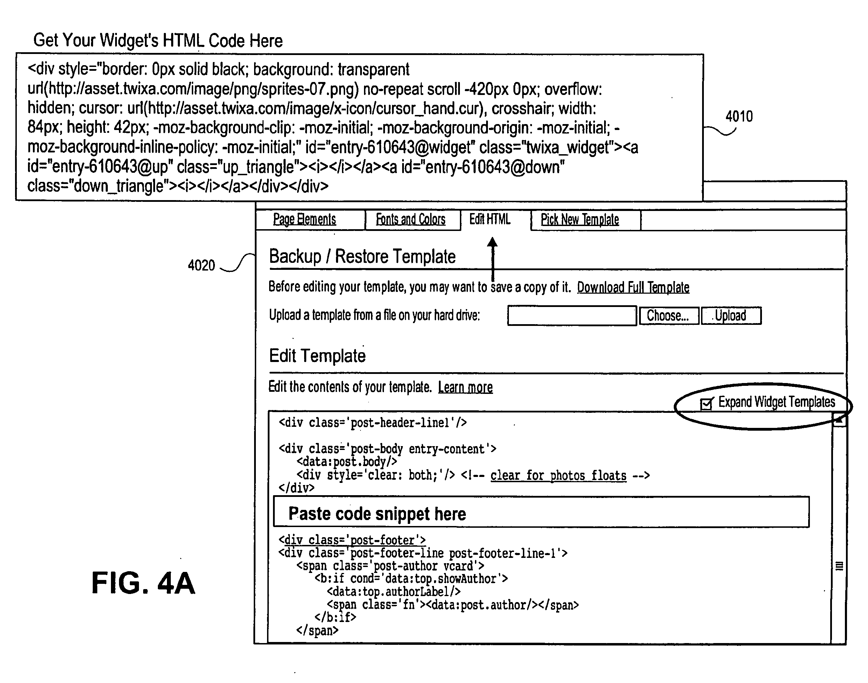

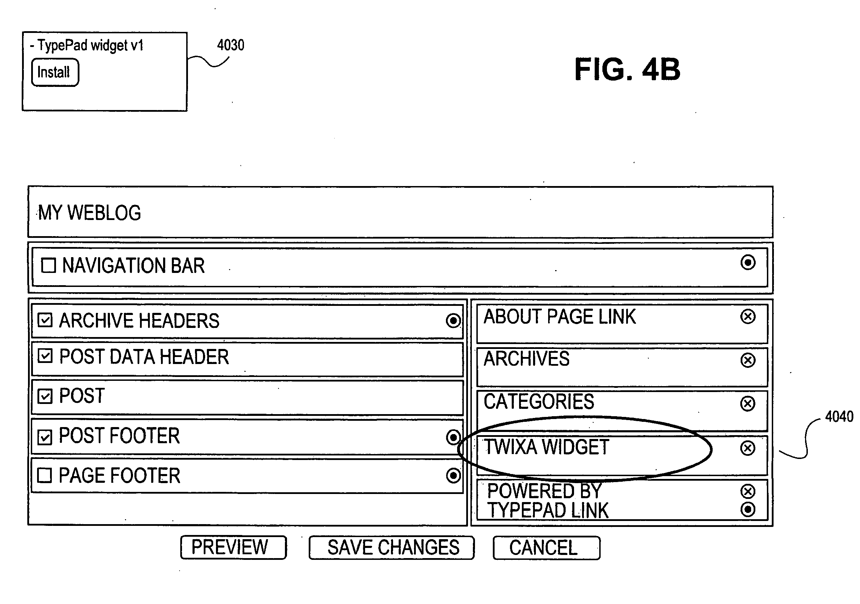

Fig 4 shows the flow for installing the invention, where widget installation may be either manual or automatic, where the choice for either is left to the installer. The installer, also called a publisher would install the widget component of the invention into his/her website, blog, or CMS using an automated process, with example shown in Fig 4b, when available to maximize speed and efficiency of installation, however, the installer may use manual installation as shown in Fig 4a, if he/she prefers the control afforded by manual installation, customization issues limit the applicability of automatic install, or automatic installation is not yet available for the installer's website, blog, or CMS.

When the installer decides to install the widget form of the invention, he/she is ready to start 4100. An account must be created 4200 which allows for tracking, accounting, payment, and other management mechanisms. With an account, the installer can then customize his/her widget 4300, where customization may be as simple as choosing the standard color and text, or any level of complexity changing the ad unit, recommendation preferences, search engine preferences, mouseover actions, and more.

Once customized, the installer chooses manual or automatic install 4400.

If automatic is selected, user is presented with a "install" button which the user clicks 4500, and automatic install precedes. Parts of this process are discussed and shown in Fig 4b. The installer may need to login to his/her website, blog, CMS during this process if he/she has not already done so and if required by the installer. Automatic installation is a common capability for javascript-based sharing tools, as evidence by the widget gallery at

### http://www.sixapart.com/typepad/widgets/.

If installer chooses manual installation, he/she is presented with widget code 460, as shown in Fig 4a, which must be copied and pasted into the website, blog, or CMS an appropriate location 470, also shown in Fig 4a.

Fig 4a shows example code used for a manual installation of the code to make the invention work, where manual installation is one type of installation method and automatic is the second type of installation method discussed in Fig 4b. 4010 shows a code snippet box, where an installer would get the code snippet to put on their server. The code from 4010 would be copied from an account management console or dashboard labeled to indicate that the code was necessary for the invention. The code shown is a sample only, where actual operating code for the invention may be the same, slightly changed, or significantly changed to provide current and/or future services related to the invention. The use account management dashboards and snippets for copy and paste are common activities and do not need future elaboration. The code 4010 is then pasted into installer's web page, blog template, or CMS as HTML, into PHP or other web programming language, where adjustment or transformations may be necessary, or into a blog system or CMS which may handle programmatic insertion of the code at the appropriate time and location when the web page renders. In a preferred embodiment, code 4010 would be pasted into a blog or CMS which would use the code snipped directly without alteration in most cases. The code would be placed in a location in the CMS or blog template, where the location for placement would be provided by the site or content management tool. 4020 is an example placement of the code into a template for the blogger system, where usage of the snippet or snippet variation can be used with blogging tools including but not limited to blogger, TypePad, Wordpress, Moveable Type, and more. The suggested placement of the widget in the example before the text in 4020 shown as "<div class='post-footer'> is designed to insert a widget into each article at the end of the article content, before the footer. Therefore, a widget is rendered for each and every article, in the context of the article at the end of the article. Each article's context then is leveraged by the widget for rendering when the widget is clicked, impacting the results, search box, ads, recommendations, and other content that appears in the bubble.

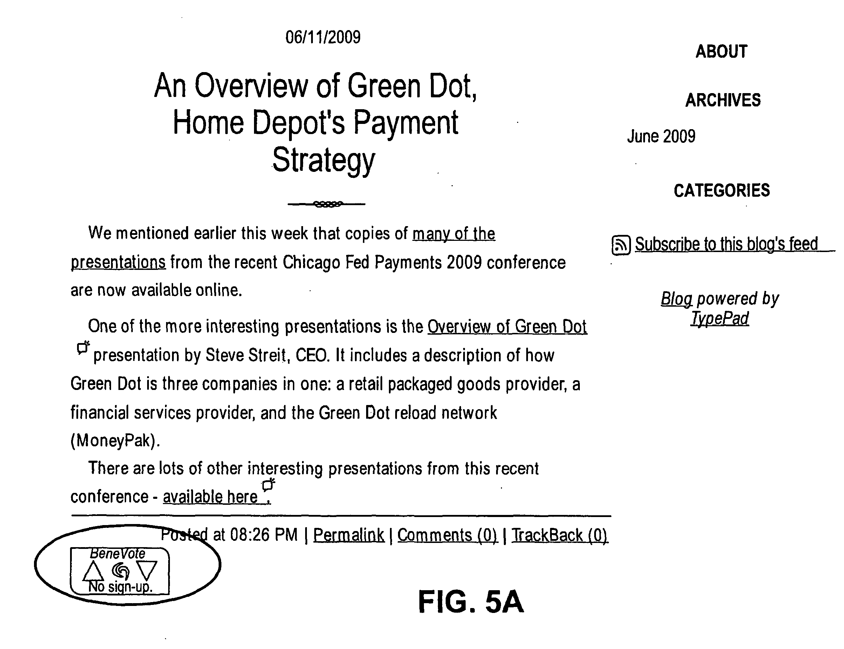

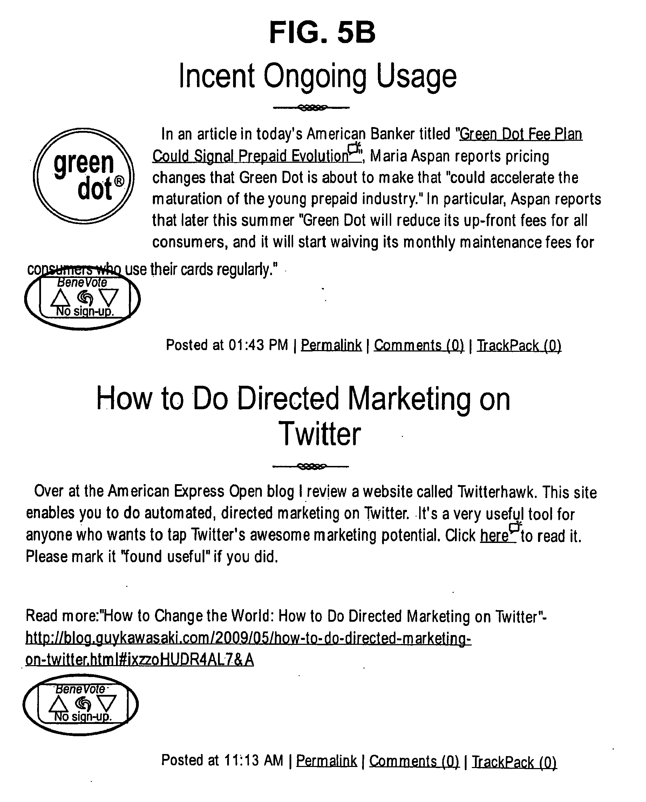

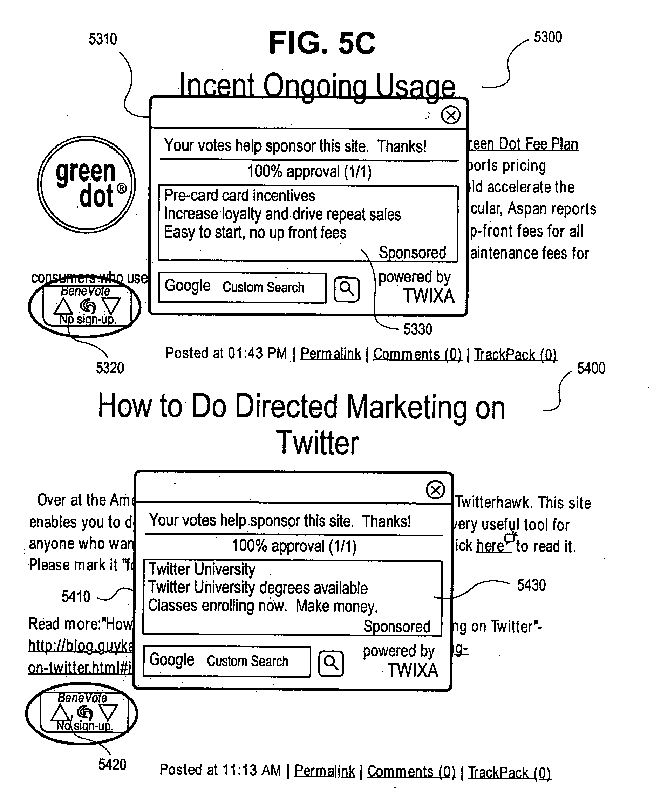

Fig 4b shows sample interfaces from the automatic installation process described in Fig. 4. If the installer chooses to use automatic install, the installer will be presented with an install button shown in 4030. 4030 is one representation of an installation button to install the invention on a website-or blog, and is not meant to limit the size, color, form, function, or customizations that may occur with the installation of the invention code. The installer may install the base invention, customized versions of the invention, where customization may be done before the installation button is available or at any time thereafter, add-ons, plug-ins, or supplements to the base invention or other components that may complement or supplement the invention via direct or indirect mechanisms including, but not limited to public or private APIs, SDKs, and more. 4040 shows an example step in the installation process where the invention - has completed the automatic install process and is show highlighted as "Twixa widget" in the layout view of interface. The invention would then be available for use as shown in Fig 5. The interface in 4040 shows one specific version of what the administrative view would be of the invention installed in a TypePad environment and is not meant to limit the form, structure, design, or other aspects of the invention as it is used, installed, or presented in an administrative view. As with the manual installation, the automatic installation causes the widget to render with knowledge or and in context of each article.

Fig 5a shows an example screen view of the invention installed and being rendered on an installer's website. In this case the invention is installed on a blog and is show in the first of several phases, the phases of which will be described later. At the bottom of the figure circled (highlighted by ellipse) is the invention which, after installed, appears automatically at the end of the blog post in the example. The exact placement, while shown at the end of the blog post, after the words "Posted" as shown, is not restricted, and the exact placement can be controlled by the installer during manual installation or during custom configuration of the automatic installer.

While the placement and exact location of the invention is not fixed, the ability of the invention to render once or more than once automatically for each article or blog post is part of the invention. The automatic rendering uses the website, content management system (CMS), or blog's looping structure to guarantee the one or more placements. In a preferred embodiment, the automatic installer described in Fig 4 where the invention is installed in a blog, detects the blog structure and automatically installs the widget component of the invention such that the widget is placed one or more times per article rendering and is fully aware of the article context.

Fig 5b shows an example screen view of the widget component of the invention installed and being rendered on an installer's website where the invention renders twice, once for each article (there are 2 articles), and is circled (highlighted by ellipse). The rendering twice, once for each article is the default behavior and a common behavior for some types of widgets used in blogs.

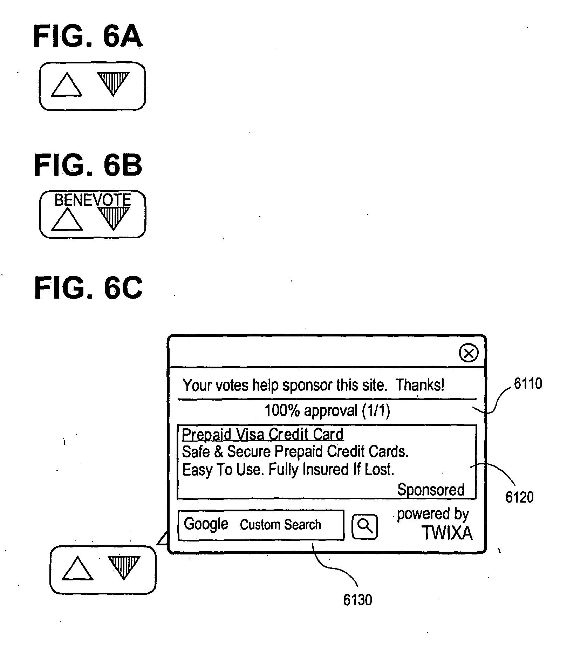

Fig 5c shows an example screen view of the widget component of the invention installed and being rendered on an installer's website as in Fig 5b, with the added display of the widget bubble, part of the invention discussed in Fig 6. Each widget component of the invention renders for each article in the context of the article, where the context of the article plays a defining role in showing value of the widget as the context of each and every article that the widget appears provides a context sensitive voting opportunity and a resulting context sensitive bubble.

5300 shows an article on a blog titled "Incent Ongoing Usage", where the content or the article discusses incentives for prepaid card usage. The context of the article includes information including but not limited to incentives, prepaid cards, prepaid industry, green dots, and more as found in the text of the article and the article keywords, tags, and descriptions, commonly found in blog entries.

A widget is rendered in the context of the article shown as 5320.

A widget bubble is rendered 5310 after a user action such as a click on the widget, registering a vote and causing the bubble to render. While other aspects of the bubble are discussed in Fig 6c, of contextual importance is the ad 5330.

Ad 5330 represents a post-vote ad that appears in context of the original article after a user initiated action (user vote). The ad is based on the context of the article and the user who voted. This represents a context sensitive, user initiated ad, served after the user opted to vote, where the ad was sourced in context of the article and the vote action did not take the user out of context to another location.

5400 shows an article on the same page as the article 5300, titled "How to Do Directed Marketing on Twitter", where the content or the article discusses marketing using the web tool Twitter. The context of the article includes information including but not limited to Twitter, twitter tools, twitter hawk, marketing, and more as found in the text of the article and the article keywords, tags, and descriptions, commonly found in blog entries.

A second widget on the page is rendered in the context of the article shown as 5420, in the context of the article 5400.

Another widget bubble is rendered 5410 after a user action such as a click on the widget, registering a vote and causing the bubble to render. While other aspects of the bubble are discussed in Fig 6c, of contextual importance is the ad 5430.

Ad 5430 represents a post-vote ad that appears in context of the original article 5400 after a user initiated action (user vote). The ad is based on the context of the article and the user who voted. This represents a context sensitive, user initiated ad, served after the user opted to vote, where the ad was sourced in context of the article and the vote action did not take the user out of context to another location. Ad5430 is based on a different context than ad 5330, typically, subject to inventory and targeting factors, resulting in a different ad unit. In the preferred embodiment, the post-vote context sensitive in-page ad shown in example as 5330 and 5430 would deliver ad relevant not only due to the context of the ad, but relevant based on users vote, voting history, and other explicit or implicit preferences.

Fig 6 shows the basic button states of the widget component of the invention with 6a, 6b, and 6c showing various states of the widget when rendered as a voting widget in an interface or on a web page after installation. Colors, wording, layout, or organization shown in the figures are not intended to limit the scope of the invention and are shown as examples of possible implementations, where current and future implementations may leverage the same or extended functions to provide the same, more, or less information or functionality as required by users or installers of the invention.

Fig 6a shows a basic implementation where the invention is rendered showing the core functionality of voting, accomplished by clicking the red or green arrows (down or up arrows).

In the figure, the red arrow, pointing down, is highlighted for effect. The highlight could also be made on the green arrow for effect. For the purposes of this document, this basic state is referred to as state A. For comparison purposes, state A does not show voting or any type of rating results. Users are incented to click the widget to get results.

Fig 6b shows the invention in a secondary state B, where additional information, instructions, visual elements may be made visible or known to the user during a mouseover action common in javascript implementations, however the mouseover effect of revealing state B may be implemented in any number of technologies, including by not limited to javascript, vbscript, Perl, CSS, visual basic, visual C++, C, java, python, and other visual rendering technologies for programming or scripting languages. State B shown in 6b is an optional state, meaning that it is not necessary in the operation of the invention, but provides utility to the user due to the additional meaning, instructions, or information conveyed during the mouseover action. As before, the exact visual or text elements shown in 6b can vary and should be chosen to increase user interaction, greatest conveyance of meaning, or to increase interaction. For comparison purposes, state A does not show voting or any type of rating results.

Fig 6c shows the invention in state C, after the widget component of the invention is clicked. The click signifies a vote for (up and green) or against (down and red) the article, by the user, where the users arbitrary decision criteria is used in making the voting decision. The choice of up and green, as a vote for, and down and red, as a vote against, are chosen to align with current convention and may be changed to any color or form to align with convention and assist users in understanding the use of the invention as voting for an article. When a user votes, either up or down, a vote bubble is rendered as shown in Fig 6c. The vote bubble has visual elements to convey connection to the inventions voting widget. The bubble includes several key elements. 6110 shows the results of the voting, where results may be presented in a number of forms individually or combined. In the example, 6110 shows the results in the form of a green bar graph and in numerical values where there is 1 vote positive out of 1 vote total for the 100% value. 6120 shows a sponsored ad, where the ad can have several forms, shapes, layout, and content, where the exact form, shape, layout, and content are determined by available advertising standards or by other decision methods for the benefit of the advertiser, publisher, implementer of the invention, designer of the ad, or ad serving technology. 6130 shows a search box , where any search provider may be used where embedding the search box is technically feasible. In the example, Google custom search is used as implementation of Google custom search is widely understood, however other search tools such as Microsoft Bing or Live, Yahoo BOSS, or others may be used. In a preferred embodiment, results will be shows as a series of bars rendered using scalable HTML DIV tags with colored backgrounds, the ad is provided by an ad network with the highest paying and most relevant ad optimized for highest effective CPM, and the search tool provider is variable, and chosen in real-time to provide the users favorite search engine or defaulting to the search engine chosen by publisher or technology provider delivering the widget of the invention.

A key factor of the bubble is that it is both context sensitive and appears within the article, for each and every article. The bubble in 6c is rendered for each click on a widget, where the click renders the bubble and does not displace the user by opening another page or taking the user to another page. The user who clicked experiences a constant context with simply additional information and content available to him/her. The user is presented with information which may benefit him/her, as poll results are displayed, quick access t a search box is provided (vs. moving the mouse 4 to 10 times further to access one in the browser), and a context sensitive ad is provided that may complement the readers state of mind in reading the article. There are no jarring distractions, new web page invocations, or visually distracting effects.

As suggested by 5c and clarified in 6c, the widget bubble represents a context sensitive, user initiated ad, served after the user opted to vote, where the ad was sourced in context of the article and the vote action did not take the user out of context to another location. In the preferred embodiment, the post-vote context sensitive in-page ad shown in 6c and previously in 5330 and 5430 would deliver ads relevant not only due to the context of the ad, but relevant based on users vote, voting history, and other explicit or implicit preferences. In future embodiments, it's expected that the context sensitive, user preference based, and voting history knowledge will be supplemented by user initiated text highlighting, search terms history, and other user directed activities to increase relevance and appropriateness as allowed and opted into by users.

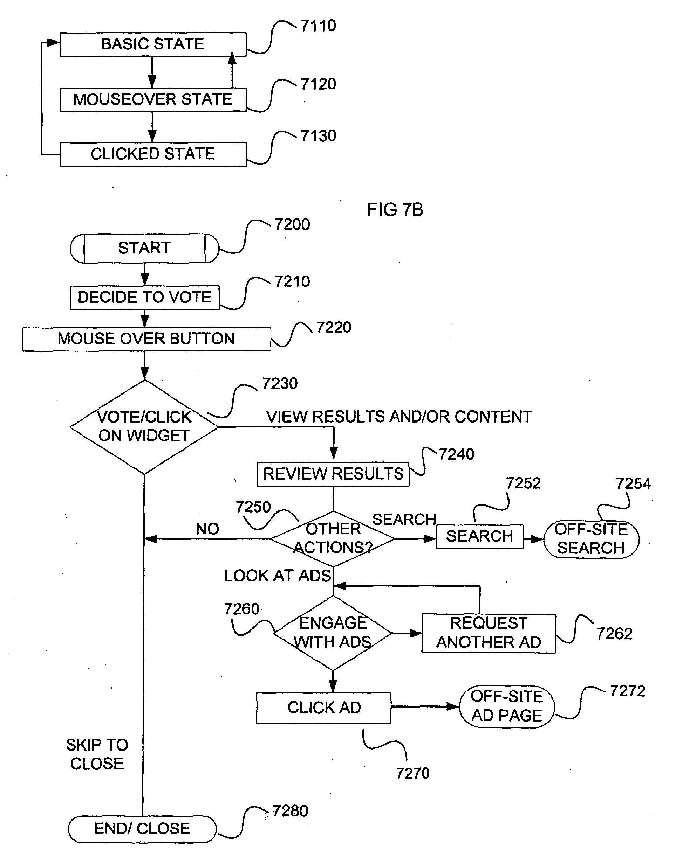

Fig 7a shows the basic states of the invention during a runtime rendering of the widget. 7110 represents the basic state of the invention in the rendered widget, referred to as state A in Fig 6a above. 7120 shows that the widget may take optional state B shown in Fig 6b above. In mouseover state B, the widget may return to state A upon a mouseout action. If the widget is clicked (any click), the widget enters state C with the appropriate processing for vote recording and tallying, listed as 7130. 7130 represents the clicked state where the bubble is rendered with contents described in Fig 6c. Since 7120 is an optional state and is not required for 7130, a click while the widget is in state A, or 7110, will bring the widget to state C, 7130.

In future embodiments, it would be a simple extension to provide multiple outcomes from clicking the widget while in state A or B, as the location of the click could represent a vote or poll on multiple topics with multiple choice responses. Any X,Y coordinates could be used to collect input to represent yes, no, various degrees of like or dislike, or even ratings. The multiple choices could then display not only results associated with a binary vote or multiple choice answers, but could also yield bubble designs associated with the vote value sensitive to the x,y or particle selection of the multiple choice options.

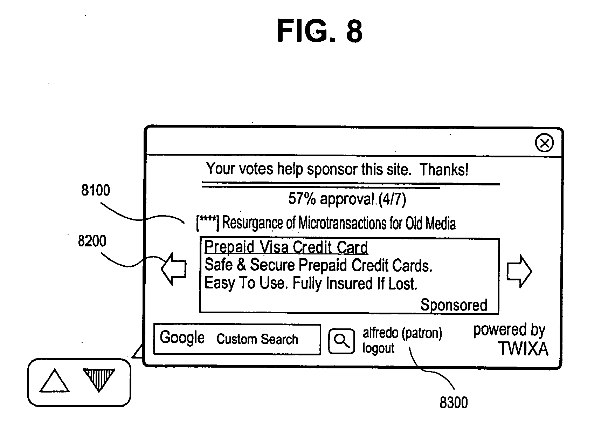

Fig 7b shows the basic user interaction with the widget component of the invention. 7200 starts with the user at or reading a web page or blog. For the purposes of this discussion, the user is reading a blog with the widget component of the invention installed and working. At some point after the article and widget renders, the user decides to vote 7120 when presented with the widget in state A, from 6a. The user then mouses over the widget component of the invention 7220 and reveals state B, from 6b (note, this step is optional), and user can directly execute step 7230 from step 7210. User clicks on the widget, clicking the green up arrow (or down red arrow) in 7230, where the user decides to view the results or content. User is shown state C, from 6c, and can view voting results 7240 with his/her input included in the tally. Other actions may be taken, 7250, such as entering info into the search box 7252, which leads to search results on a search results page 7254, or looking at the ad 7260. The user may click the ad 7270, which takes the user to an ad landing page 7272, or the user may request another ad 7262. The interface for the ad request is shown in Fig 8. At any point, the user may disengage interaction with the bubble and close it 7280 or leave the context or web page where the widget is rendered.

Fig 8 shows a future embodiment of the widget rendered component of the invention. The invention may be extended visually to include recommendations 8100 and other user-centric content which may include but is not limited to articles based-on user preference, location based articles and content, sponsored recommendations based-on user preference, local advertisements, and more.

8200 in the future embodiment includes navigation buttons which provide access to additional content 8100 and/or sponsored ads. In future embodiments, the invention is expected to provide increased relevance to the user based on factors including but not limited to context, behavior, physical location, and other factors. Clicking on the arrows left or right allows the user to cycle through other content and/or ads and come back to one if they move past a link or content they desire.

8300 in the future embodiment includes presentation of the user's user name, patron level, and logout links, where each of those items are clickable. The user name links to user management screens which control user information including but not limited to demographics, preferences, interests, deals, and other information. The patron level link, show as "patron" in the figure represents a status level that may represent factors including but not limited to participation, sponsorship activities, loyalty activities, and more. The "logout" link is replaced by "login" and "register" links if the user is not logged in. The logout link allows the user to logout if he/she is logged in, and, if not logged in the "login/register" allows him/her to login to his/her account or create an account if he/she is not logged in or does not have an account.

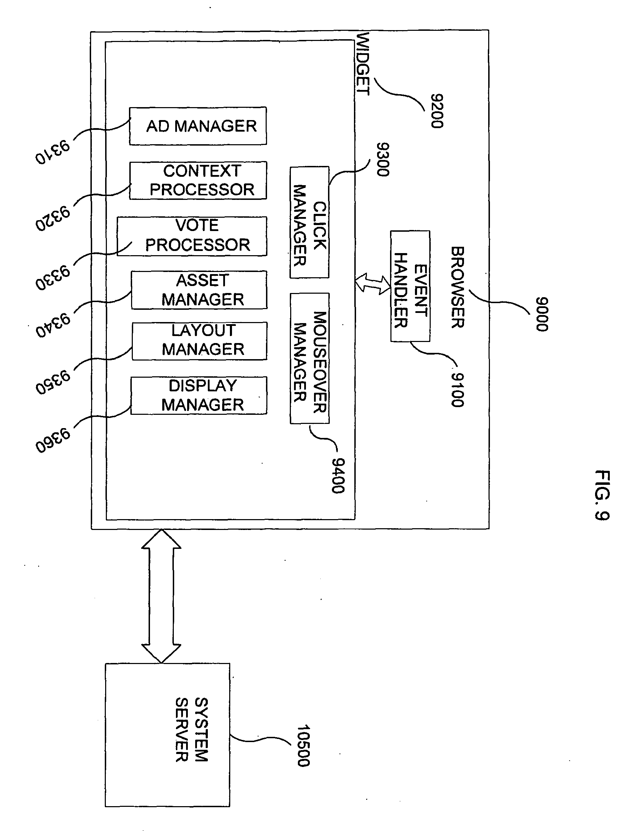

Fig 9 shows a simplified system diagram where the widget component of the invention and the system server component of the invention interact to render the appropriate information. This is a simplified diagram where the basic functions are shown to enable a designer to conceive and implement the necessary functions and is not intended to constrain the implementation to achieve the overall operation of the invention. Functions or capabilities discussed are intended as examples for implementation and specific features, handshakes, data exchanges, and other interchanges may be combined into larger functions, combined across larger named functions, or split into more atomic components or modules based on design necessity, scaling, efficiency, pre-existing design, or other operational tradeoffs.

System server 10500 provides the backend services of the invention and communicates with the widget component of the invention, delivering information and assets including but not limited to user validation, data, assets, graphical assets, style and presentation assets, remote asset source location and availability, analytics collection, voting information, and more.

Browser 9000, acts as the application container in a preferred embodiment, where browser 9000 includes scripting engines, including but not limited to javascript, vbscript, and others as well as an HTML renderer. Browser 9000 has a built-in javascript engine which includes an event handler 9100 designed to listen for, capture, and process events such as mouseovers and clicks on objects used in standard practice in web and web application design. Widget 9200 represents the widget component of the invention and is the basic interface seen by the average user of the invention. The widget is rendered via a combination of javascript, HTML, and CSS, where the exact design can change based on preference or customization parameters, but the overall function remains the same. Style and placement of the widget may use custom, open source, or proprietary libraries such as qtip.js, prototype.js, mootools.js, jquery.js, and prototip.js, all libraries which average javascript developers are familiar with, know about, or know how/where to access them. Instantiation of the widget can thusly include standard image calls such as <img src="path to image"...> using absolute or relative placement for the image, bubble, or specific elements related to or within either, where <div style="position:relative"...>

Mouseover manager 9400 handles the actions required when a "onmouseover" event is detected as a result of the user moving his/her mouse over the widget component of the invention. Such actions include, but are not limited to new visual element display when a mouseover occurs, image swap out, image sourcing for image swap out, function execution for special mouseover actions, and calls to remote servers for security, real-time data update, or other purposes. In a preferred embodiment, the mouseover manager operates with the widget component of the invention, where the widget is rendered in a computer's web browser, and the mouseover set to respond using the browser's built-in javascript engine, using AJAX calls for real-time exchange of information for the security or real-time updates. The Mouseover manager may also perform analytics functions such as collecting and tracking the mouseover attempts by a user as well as identify the user based on cookies.

Click manager 9300 listens for a click event on the widget and processes a number of functions when the click occurs. These functions include but are not limited to activating the ad manager, display manager, layout manager, vote processor, context processor, and more.

Asset manager 9340 manages the sourcing and availability of assets in the invention, including but not limited to graphic elements, real-time data acquisition, online status, content and more.

Each article, blog post, or content item has a context associated with the content surrounding it. In a preferred embodiment, the widget component of the invention is placed such that one or more widgets appear for each blog or article post. The article or post is the context of the widget, and includes but is not limited to the text of the article or post, the URL, HTML and tags of the page, content from third parties, blog rolls, popular article lists, sponsor and advertiser information, and more. The context manager uses such context for each blog post or article to affect the content of the widget bubble that appears after a click on the widget. The context processor 9320 acts as a context manager and can be run locally in the browser or can communicate with the system server or third party server designed to assist with the context translation for use with ads and recommended content and context processing. The context manager can implement simple context algorithm including word counting and classification up through more intensive semantic engines for understanding mood, tone, and concepts. In a simple, minimum form, the widget code scans each article and extracts context information from keywords, tags, headers, categories, and pre-structured information. In more advanced setups, the simple context collection is supplemented by word frequency, semantic analysis, and concept structures. In the preferred embodiment, the context manager leverages system servers' context processer and the best available third-party's context processors to provide an accurate context of the article where the widget bubble is displayed. This context processing and analysis enable the delivery of context specific ads and recommendations modulated by the users current voting actions, past voting actions, and his or her preferences (explicit and revealed) on a per article basis.

Vote processor 9330 collects and processes the user's vote, updating local cookie information, updating the display manager, and communicating with the system server to update the user profile. The vote manager enforces voting rules including but not limited to "one vote only" rules based-on cookie protection, unlimited votes per user, one vote per session etc. Stringent voting rules invoke the vote manager communication with the server to implement voting management including, but not limited to verify user votes, voting rights, and results display, and more.

Layout manager 9350 makes sure that the content will render correctly in various browsers type and browser versions. The layout manager maintains a structural view of the layout and placement of elements of the after-click bubble of the widget component of the invention and includes browser or version specific tweak and/or adjustments to insure proper display. In the preferred embodiment of the widget component of the invention displayed in a blog post or article, the layout manager includes the style elements including style sheet tweaks and javascript necessary to manipulate the style into proper behavior.

Display manager 9360 takes the content provided by the asset manager, ad manager, context manager, and vote processor and places it into the layout of the layout manager. The display manager also actively runs such that event driven actions by the user are also handled and displayed. For example, if users are allowed to vote more than once, the display manager may update the voting percentage or graph using standard dynamic html such as getElementbyID. The Display manager works in conjunction with the context manager and system server to source and insert the appropriate code for rendering the appropriate search engine used in the widget bubble.

Ad manager 9310 performs the function of managing the advertising units presented to the user when a "click" event is received based on the user's actions. The ad manager provides local support for sourcing and managing advertising assets to the widget's bubble interface, where advertising assets may come from third party ad networks or from advertising inventory managed by the system server. Advertising assets may be managed through the asset manager for efficiency, however, the ad manager may simply insure that an ad is placed as a result of a URL reference to an ad unit that is dynamically provided by a third party ad network or system server or as statically available as a fixed sponsor or ad asset. While the ad manager attempts to provide inventory to the ad space in the widget bubble, there is no guarantee that an ad will be served.

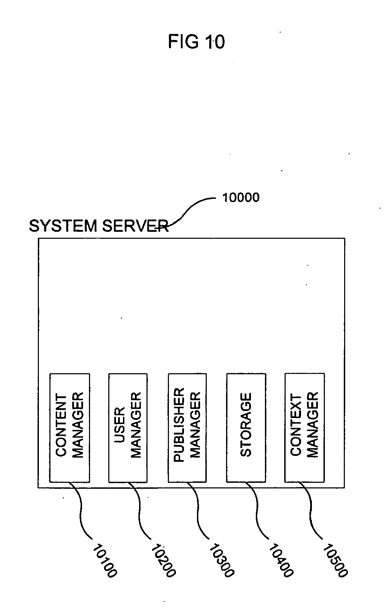

Fig 10 shows the system server in more functional detail, where the system server of the invention, in the preferred embodiment, connects to the distributed widget components of the invention as they are rendered on distributed computers accessing the blog or websites of installers of the widget component of the invention. The server component of the invention performs several tasks, including but not limited to publisher management, user management, content management, context management, data collection and storage. While system server 10000 is shown as an aggregation of functional modules, actual implementation may combine or eliminate functional modules, where the specific function may still be performed. Functional modules are shown to provide a conceptual framework around which tasks and communication are accomplished.

User manager 10200 maintains records of users of the system including user account information, preferences, voting history, publisher access history, and more. User manager also performs user validation, and registration services, performing remote authentication and validation for registered users of the system then passing those credentials to the user's browser which the widget can then access to provide local services based on the authentication. User manager 10200 exchanges information with Content manager 10100 and Context manager 10500 to assist in the selection of relevant ads and recommendations for each user. User manager 10200 may be constructed using well understood techniques for user management and system scaling.

Publisher manager 10300 maintains records of the publishers' settings and data including but not limited to user access, voting, content popularity, and revenue. Publishers may receive a share of revenue from the ads served to users of the widget, where the share of revenue may be dependent on several factors including but not limited to the number of users, site and/or article context, user click-through rate, user offer completion rate, time series data, and other factors. Revenue share, content popularity, voting patterns, and more are available from the system server through access independent of the widget component of the invention. Publisher manager 10300 may be constructed using well understood techniques for account management and system scaling.

Content manager 10100 manages the content and/or distributed assets that are delivered to the users through the widget component of the invention. Content manager manages access to display assets such as widget design, bubble design assets, as well as components for A/B testing, where content manager works with user manager to insure the correct assets to users who may fall into designated cohorts for usability or other testing. Content manager 10100 acts more as a centralized source for assets and links to assets in file systems and databases, and communicates with asset requesting functions from the widgets.

Context manager 10500 collects, stores, analyzes, and process context provided by the context manager of the distributed widgets to build context sensitive profiles of publisher articles and content to insure the most actionable ads, recommendations, and search results are delivered to users exposed to the widget components of the invention. Context manager 10500 interacts with asset requesting functions of the widget. The Context manager may also be extended to leverage user profile data entered by the user and user behavior to deliver relevant ads combining user context, expressed interested, and psychographic data.

Storage 10400 provides local and remote storage for assets delivered by the system servers and used by the widget. Storage 10400 also include caching systems such as mem-cache to manage asset request an delivery of high demand assets without having to repeatedly hit any system disks, effectively pulling assets from memory very quickly.

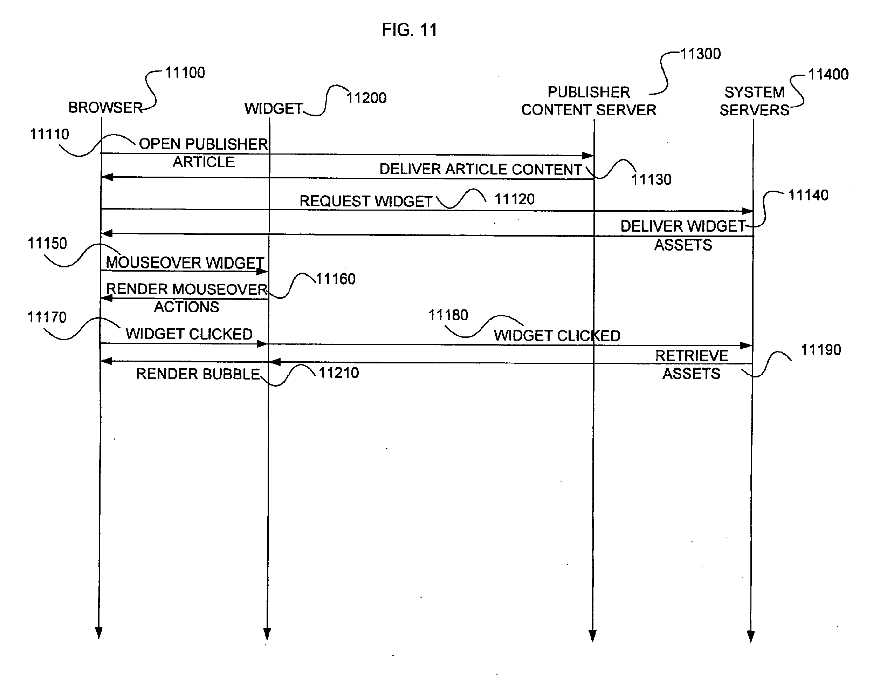

Fig 11 shows a communication diagram showing the basic communication of the system involving the widget 11200, web browser 11100, publisher's content server 11300, and the system servers 11400.

Browser 11100 represents the preferred embodiment application vehicle, where the widget component of the invention runs as a browser application. The web browser 11100 may be a browser on any computing device including desktop, laptop, or mobile computers or phones equipped to access content on publisher's servers on public or proprietary networks. Common browsers include Mozilla Firefox, Microsoft Internet Explorer, Opera, Google Chrome, and Apple Safari.

Widget 11200 represents the user facing, browser rendered component of the invention. For purposes of this diagram, browser functions downloaded and installed as part of the widget are described as coming from the widget component of the invention.

Publisher content server 11300 represents the installer of the widget 11200 who uses the invention to collect votes on articles and content, earn advertising or other revenue, and collect statistics.

System servers 11400 represent the group of servers used to provide services for the invention, including but not limited content delivery servers, visual asset delivery servers, database servers, accounting and analytics servers, relevance and context analysis servers, and code delivery servers. Servers delivering content, code, or other assets are treated as logical elements even though the exact functions may be distributed or combined over several servers.

11110 represents a page request made by user and sent by user's browser to fetch a page from the publisher's site which has the widget installed.

11130 shows the page contents being delivered to the requesting browser 11100. The page contents include links to the code for the widget 11200, which is sourced from system servers 11400.

11120 shows the browser fetching the code for the widget 11200, retrieving it from system servers 11400.

11140 shows the system servers 11400 responding and delivering the widget code to browser 11100 for execution and/or rendering at browser 11100.

When browser 11100 detects a mouseover event over the widget, browser executes the widget code downloaded 11140 and associated with the onmouseover event tied to the widget object. Mouseover events are executed by widget mouseover handler 11160, executing functions and adjusting widget presentation as instructed in the code. In Fig. 6b, the mouseover event is used to show additional information about the service that the widget supports, however other functions affecting logic execution or presentation may be called into play.

When the widget is clicked 11170, onClick code downloaded 11140 and tied to the Widget 11200 is executed. The click event causes a call 11180 to the system server 11400 with information including but not limited to the user, publisher, context, vote selection, and other parameters. The information may be sent via a POST or GET HTTP method and may be accomplished using industry standard AJAX or jSON calls. Other methods of communication or information passing, however POST and GET methods are most common and easiest to understand and implement.

11400 system server processes the inbound information and prepares a response 11190 which includes the necessary assets for composing and rendering the widget bubble, including but not limited to one or more ads, search box components or code to allow search, composited or aggregated results for all voting on the article, display information for rending the results graphically, and recommended content which may or may not include recommended articles, ads, or other links. The assets may include all assets required for rendering, including complete ad units, however, in a preferred embodiment, ad unit optimization may deliver links to remote servers not the system server to retrieve additional assets to complete rendering of the widget bubble.

11210 shows the last step of rendering the widget bubble. The widget bubble includes the assets sourced from the system servers 11400 and additional elements that were retrieved from servers not the system servers.

An aspect of the present invention can be summarized as a method and system of voting and polling that utilizes content and context awareness of articles or blog posts published to deliver a revenue opportunity via context sensitive ad units based on article content, user revealed and implicit preferences, voting history, and other user opted in behavior.

## Claims

1. A computer-implemented method comprising:
displaying content to a user via a display device;
displaying a visual icon proximate the displayed content, the visual icon being associated with a context of the displayed content, and wherein the visual icon facilitates a user rating of the displayed content;
detecting a user activation of the visual icon; and
displaying, upon detection of user activation of the visual icon and an advertisement associated with the context of the displayed content.

2. A method as recited in Claim 1 wherein the summary of multiple user ratings of the displayed content includes an indication of the total number of user ratings.

3. A method as recited in Claim 1 or 2 wherein detecting a user activation of the visual icon includes detecting which portion of the visual icon was activated.

4. A method as recited in anyone of Claims 1 to 3 further comprising associating one of a plurality of ratings with the user based on the portion of the visual icon activated.

5. A method as recited in anyone of Claims 1 to 4 further comprising communicating the rating associated with the user to a data storage system.

6. A method as recited in anyone of Claims 1 to 5 wherein the user rating of the displayed content includes a positive or negative vote.

7. A method as recited in anyone of Claims 1 to 6 wherein the user rating of the displayed content includes a ranking of the displayed content by selecting one of a plurality of predetermined ranking levels.

8. A method as recited in anyone of Claims 1 to 7 further comprising displaying, upon detection of user activation of the visual icon, a search box.

9. A method as recited in anyone of Claims 1 to 8 further comprising displaying, upon detection of user activation of the visual icon, an option to receive more information associated with the advertisement.

10. A method as recited in anyone of Claims 1 to 9 further comprising displaying, upon detection of user activation of the visual icon, an option to display a different advertisement.

11. A method as recited in anyone of Claims 1 to 10 further comprising displaying, upon detection of user activation of the visual icon, an option to display different content related to the originally displayed content.

12. A method as recited in anyone of Claims 1 to 11 further comprising modifying an appearance of the visual icon when the user moves a pointer over the visual icon.

13. A method as recited in anyone of Claims 1 to 12 wherein the displayed advertisement is further selected based on the user's previous content ratings.

14. A method as recited in anyone of Claims 1 to 13 wherein the displayed advertisement is further selected based on additional information known about the user.

15. A method comprising:
displaying an indicator proximate displayed content, the indicator being associated with a context of the displayed content and facilitating a user interaction with the displayed content;
detecting a user initiation of the invocation of a service associated with indicator; and
displaying, upon detection of user initiation, a response that contains an advertisement.
